# EUROPÄISCHE PATENTANMELDUNG

(11) **EP 0 957 255 A2**
(43) Veröffentlichungstag der Anmeldung: **17.11.1999**
(21) Anmeldenummer: 99104636.8
(22) Anmeldetag: 09.03.1999
(51) Int. Cl.: F02D 41/28, F02D 21/08, F02D 41/14, F02D 41/06

(54) **Verfahren und Vorrichtung zur Steuerung einer Brennkraftmaschine**

(30) Priorität: 09.05.1998 DE 19820904
(71) Anmelder: ROBERT BOSCH GMBH, 70442 Stuttgart (DE)
(72) Erfinder: Engel, Gerhard, 70469 Suttgart (DE); Berger, Joachim, 73650 Winterbach (DE); Birk, Manfred, 71739 Oberriexingen (DE); Strohrmann, Manfred, 76137 Karlsruhe (DE); Rupp, Peter, 71686 Remseck (DE)

(57) **Zusammenfassung**

Es werden ein Verfahren und eine Vorrichtung zur Steuerung einer Brennkraftmaschine beschrieben. Ein Steller dient zur Beeinflussung der Menge an rückgeführtem Abgas. Ausgehend von einer Istgröße, die die Menge an rückgeführtem Abgas kennzeichnet, und einer Sollgröße gibt ein Regler eine Stellgröße zur Ansteuerung des Stellers vor. Es wird ein erster Meßwert in einer ersten Position (geöffnet) des Stellers und ein zweiter Meßwert in einer zweiten Position (geschlossen) des Stellers erfaßt, wobei ausgehend von der Differenz der beiden Meßwerte die Istgröße oder ein Korrekturwert vorgebbar ist.

## Beschreibung

### Stand der Technik

Die Erfindung betrifft ein Verfahren und eine Vorrichtung zur Steuerung einer Brennkraftmaschine gemäß den Oberbegriffen der unabhängigen Ansprüche.

Ein Verfahren und eine Vorrichtung zur Steuerung einer Brennkraftmaschine sind aus der DE 195 200 39 bekannt. Dort werden ein Verfahren und eine Vorrichtung zur Steuerung einer Brennkraftmaschine mit einem Steller zur Beeinflussung der Menge an rückgeführtem Abgas beschrieben. Eine Istgröße wird mit einer Sollgröße verglichen. Ausgehend von diesem Vergleich wird ein Steller, der den Anteil an rückgeführtem Abgas beeinflußt, angesteuert. Bei der Einrichtung gemäß dem Stand der Technik wird als Regelgröße die Luftmenge, insbesondere die angesaugte Frischluftmenge verwendet. Diese wird mit einem vom Arbeitspunkt der Brennkraftmaschine abhängigen Sollwert verglichen. Die Regelabweichung regelt vorzugsweise ein PI-Regler aus.

Bei der Regelung kleiner Abgasrückführraten sind die Anteile von Frischluft groß und die Anteile an rückgeführtem Abgas klein. Bei einer Regelung der Frischluftmenge führen bereits kleine Sensortoleranzen zu großen relativen Schwankungen der Menge an rückgeführtem Abgas und damit der Abgasrückführrate.

Soll beispielsweise einem Frischluftmengenstrom von 950 kg/h ein Abgasmassenstrom von 50 kg/h zugemischt werden und besitzt der Sensor, der die Frischluftmenge mißt, eine Toleranz von +/-5 %, so wird ein tatsächlicher Frischluftmengenstrom von ca. 900 kg/h bzw. 1000 kg/h gemessen. Da die durch den Motor durchgesetzte Summe aus Frischluftmassenstrom und rückgeführtem Abgasmassenstrom annähernd konstant bleibt, führt dies zu einem rückgeführten Abgasstrom von 0 kg/h bzw. von 100 kg/h.

Dies hat zur Folge, daß die Emissionen starken Änderungen unterliegen. Das Emissionsverhalten bei kleinen Abgasrückführraten hängt sehr stark davon ab, wie genau die Abgasrückführrate eingeregelt wird. Bei kleinen Abgasrückführraten wirken sich Toleranzen, die die Frischluftmenge verändern, nur sehr gering auf die Abgasrückführrate aus. Änderungen der Abgasmasse ändern die Abgasrückführrate jedoch stark.

### Aufgabe der Erfindung

Der Erfindung liegt die Aufgabe zugrunde, bei einem Verfahren und einer Vorrichtung zur Steuerung einer Brennkraftmaschine der eingangs genannten Art die Emissionen zu reduzieren. Insbesondere soll die Genauigkeit der Regelung der Abgasrückführrate bzw. des Anteils an rückgeführtem Abgas verbessert werden.

### Vorteile der Erfindung

Bei dem erfindungsgemäßen Verfahren können die Emissionen reduziert werden. Dies erfolgt durch eine Regelung des Anteils an rückgeführtem Abgas. Dies bedeutet, bei kleinen Abgasrückführraten wirken sich die Systemtoleranzen, die die Frischluftmenge verändern, nur sehr gering auf die Abgasrückführrate aus.

Besonders vorteilhaft ist es, daß eine Differenz zwischen einem ersten und einem zweiten Meßwert zur Bildung eines Istwerts für die Regelung oder zur Bildung eines Korrekturwerts verwendet werden. Der erste Meßwert wird dabei bei geöffneten Steller und der zweite Meßwert bei geschlossenem Steller erfaßt.

Vorteilhaft ist es, wenn der zweite Meßwert bei Vorliegen bestimmter Betriebszustände ermittelt und in einem Kennfeld abgelegt ist. Dadurch muß im laufenden Betrieb lediglich ein Meßwert erfaßt werden.

Ausgehend von den gespeicherten Werten für den zweiten Meßwert und dem ersten Meßwert läßt sich der Istwert in einfacher Weise berechnen. Besonders vorteilhaft ist es, daß die Kennfeldwerte adaptiert werden können.

Eine besonders vorteilhafte Ausgestaltung ergibt sich, wenn in bestimmten Betriebszuständen beide Meßwerte erfaßt und ausgehend von diesen Korrekturwerte ermittelt und in einem Kennfeld abgelegt werden. Diese Korrekturwerte können dann zur Korrektur des Istwerts oder des Sollwerts des Reglers verwendet werden.

Eine besonders vorteilhafte Ausgestaltung sieht vor, daß das Ansteuersignal für den Steller derart moduliert wird, daß er abwechselnd seine erste und zweite Position einnimmt. Bei dieser Ausführungsform werden keine Kennfeldspeicher benötigt.

Weitere zweckmäßige Ausgestaltungen und Weiterbildungen der Erfindung sind in den Unteransprüchen gekennzeichnet.

### Zeichnung

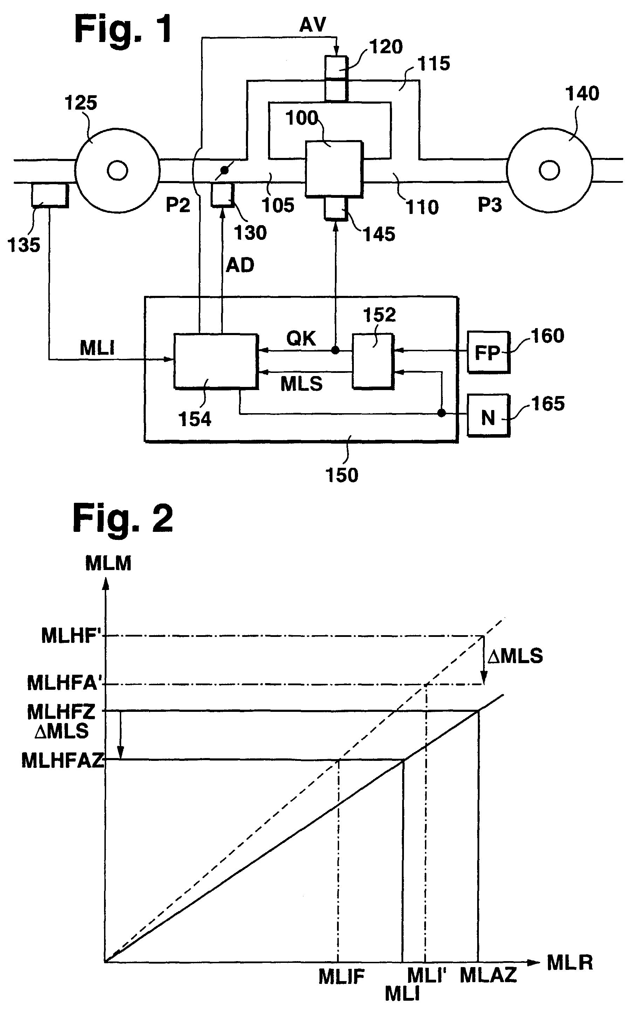

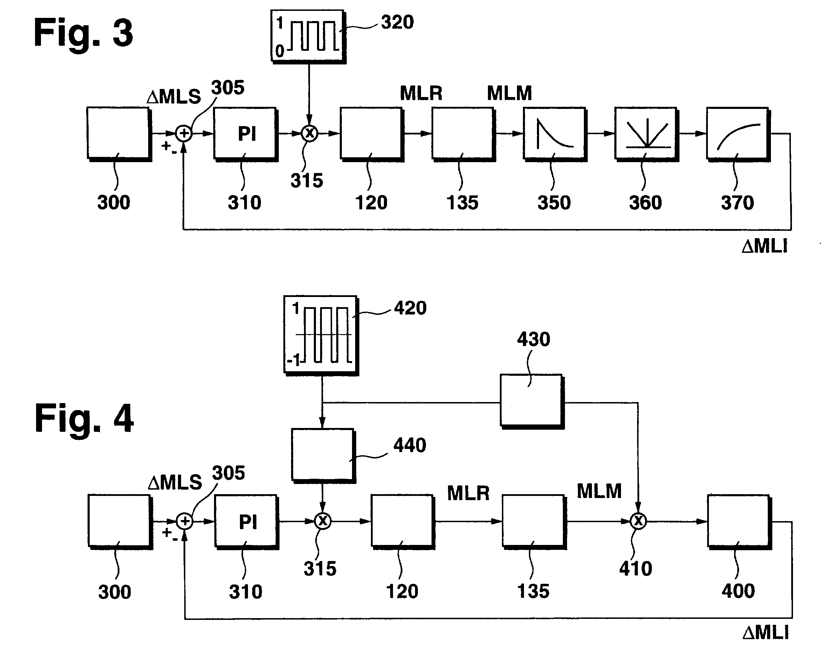

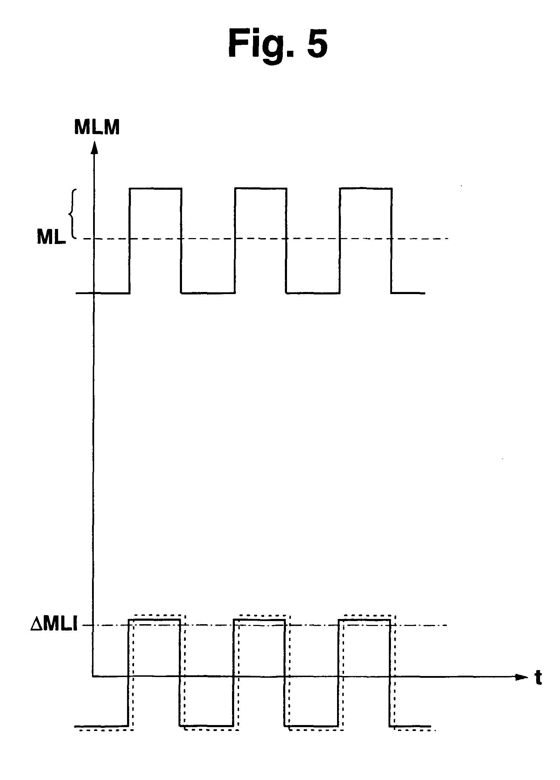

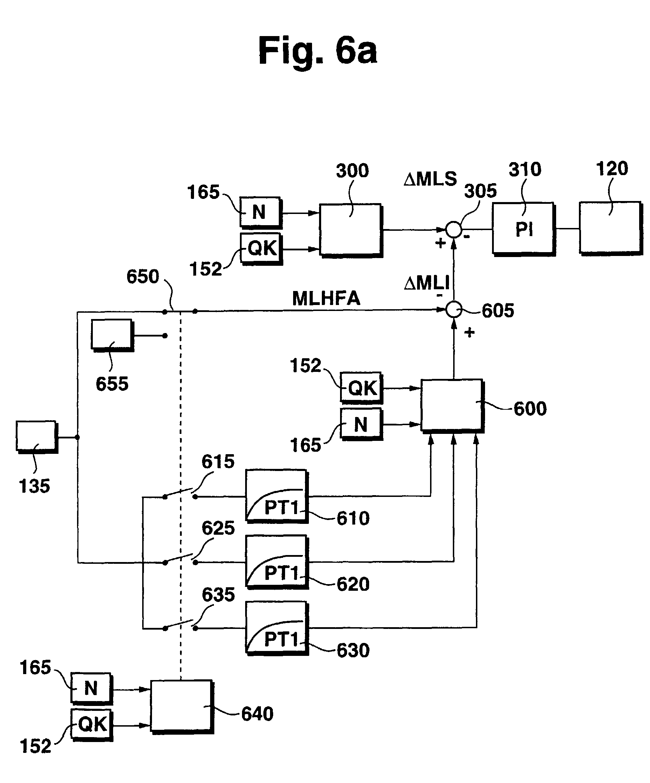

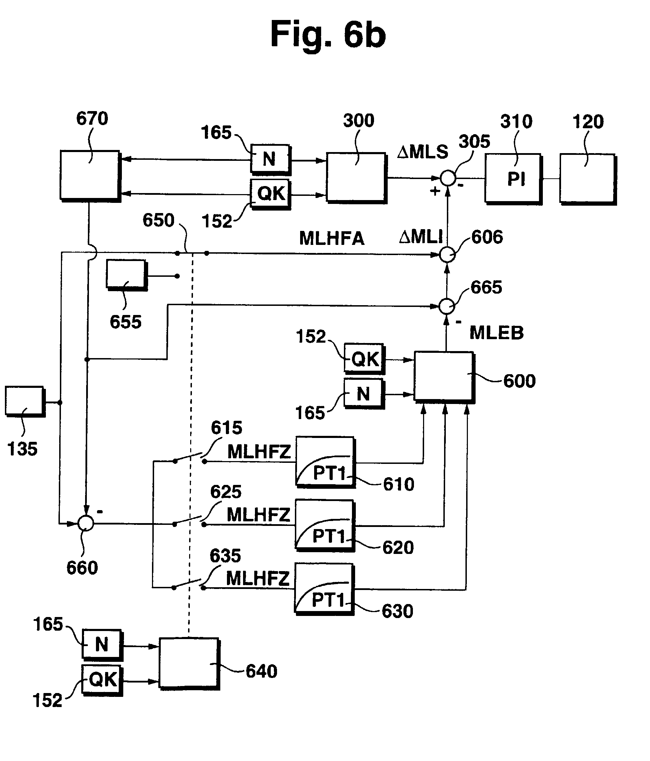

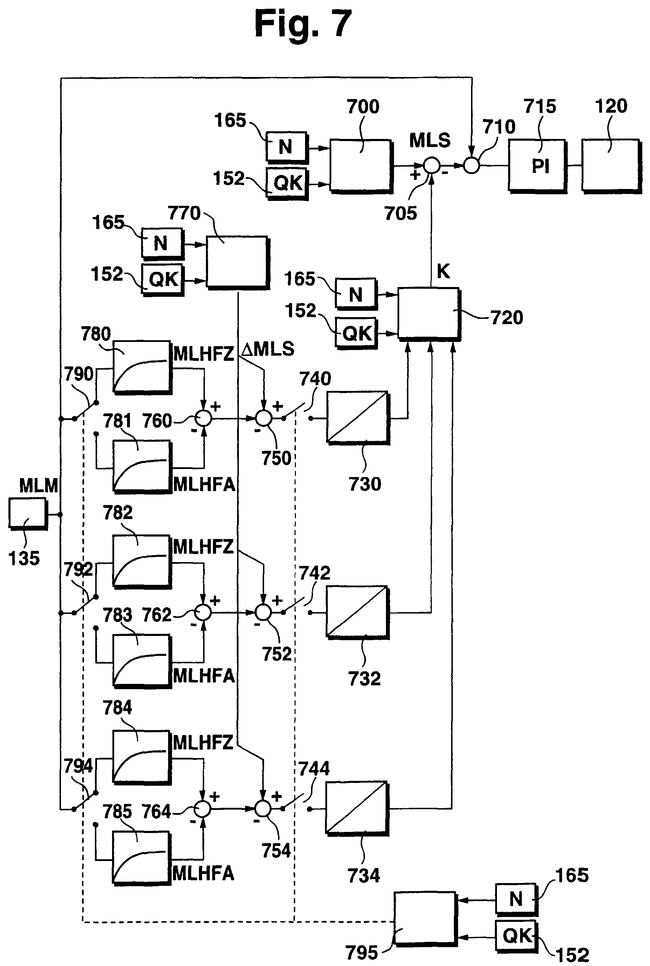

Die Erfindung wird nachstehend anhand der in der Zeichnung dargestellten Ausführungsformen erläutert. Es zeigen Figur 1 eine schematische Darstellung der erfindungsgemäßen Steuerung, Figur 2 ein Kennfeld, das den Zusammenhang zwischen der Luftmenge und dem Ausgangssignal eines Luftmengenmessers darstellt, Figur 3 ein Blockdiagramm einer ersten Ausgestaltung, Figur 4 das Blockdiagramm einer zweiten Ausgestaltung, Figur 5 verschiedene Signale, die bei der Ausführungsform gemäß Figur 3 bzw. gemäß Figur 4 auftreten, Figur 6 und 7 zeigen weitere Ausgestaltungen der erfindungsgemäßen Vorrichtung.

### Beschreibung der Ausführungsbeispiele

In Figur 1 ist die Vorrichtung zur Steuerung einer Brennkraftmaschine 100 dargestellt. Die Luft gelangt über eine Zuführleitung 105 zur Brennkraftmaschine 100. Über eine Abgasleitung 110 gibt sie Abgase ab. Eine Rückführleitung 115 verbindet die Abgasleitung 110 mit der Zuführleitung 105. In der Rückführleitung ist ein Abgasrückführventil 120 angeordnet, das die Menge an rückgeführtem Abgas beeinflußt und als erstes Stellglied bezeichnet wird.

In der Zuführleitung kann ein Verdichter 125 angeordnet sein, der die zugeführte Luft verdichtet. Der Verdichter 125 wird von einer in der Abgasleitung 110 angeordneten Turbine 140 angetrieben. Mittels eines Drosselklappenstellers 130, der eine Drosselklappe ansteuert, wird die angesaugte Frischluftmenge variiert. Der Drosselklappensteller 130 wird auch als zweites Stellglied bezeichnet.

Die Menge an zugeführter Frischluft MLI wird mittels eines Sensors 135 erfaßt, der auch als Luftmengenmesser bezeichnet wird.

Eine Steuerung 150 beaufschlagt den Drosselklappensteller 130 mit einem Ansteuersignal AD, einen Kraftstoffmengensteller 145 mit einem Signal QK und das Abgasrückführventil 120 mit einem Signal AV. Das Abgasrückführventil beinhaltet einen elektropneumatischen Wandler, der das Ansteuersignal AV in eine pneumatische Kraft und damit in eine bestimmte Stellung des Stellglieds 120 umsetzt. Die Steuerung 150 wertet die Ausgangssignale eines Drehzahlsensors 165, eines Fahrpedalstellungsgebers 160, des Luftmengenmessers 135 und ggf. weitere Signale von weiteren Sensoren, beispielsweise eines Fahrpedalstellungsgebers 160, aus.

Das Ausgangssignal FP des Fahrpedalstellungsgebers 160 und das Drehzahlsignal N des Drehzahlgebers 165 werden von einer Kraftstoffmengensteuerung 152 verarbeitet, die dann den Kraftstoffmengensteller 145 mit dem Ansteuersignal QK beaufschlagt. Ferner gibt die Kraftstoffmengensteuerung 152 ein Signal MLS bezüglich des Sollwertes für die Luftmenge sowie das Kraftstoffmengensignal QK an eine Abgasrückführsteuerung 154 weiter. Die Abgasrückführsteuerung 154 verarbeitet ferner das Ausgangssignal MLI des Luftmengenmessers 135. Die Abgasrückführsteuerung 154 stellt das Signal AV und das Signal AD zur Verfügung.

Diese Einrichtung arbeitet nun wie folgt: Die über die Zuführleitung 105 zugeführte Frischluft wird von dem Verdichter 125 verdichtet. Mittels des Drosselklappenstellers 130 kann die Drosselklappe derart angesteuert werden, daß die zugeführte Luftmenge gedrosselt bzw. ungedrosselt zur Brennkraftmaschine 100 gelangt. Die Abgase, die über die Abgasleitung 110 abgeführt werden, treiben die Turbine 140 an, die wiederum den Verdichter 125 antreibt.

Ein Teil des Abgases gelangt über die Rückführleitung 115 in die Zuführleitung 105. Mittels des Abgasrückführventils 120 ist der Querschnitt dieser Rückführleitung veränderbar und damit ist der Anteil der rückgeführten Abgasmenge einstellbar.

Die Kraftstoffmengensteuerung 152 berechnet ausgehend vom Fahrerwunsch FP, der beispielsweise mittels des Fahrpedalstellungsgebers 160 erfaßt wird, der Drehzahl N und ggf. weiteren Betriebskenngrößen ein Ansteuersignal QK, das die einzuspritzende Kraftstoffmenge festlegt. Mit diesem Signal wird der Kraftstoffmengensteller 145 angesteuert. Ferner gibt die Kraftstoffsteuerung 152 ein Sollwert MLS für die Frischluftmenge vor. Dieser Sollwert entspricht der gewünschten Luftmenge, die zur Verbrennung der Kraftstoffmenge QK erforderlich ist. Die Abgasrückführsteuerung 154 steuert den Drosselklappensteller 130, das Abgasrückführventil 120 derart an, daß der Kraftstoff in der Brennkraftmaschine mit möglichst geringen Emissionen verbrennt.

In Figur 2 ist ein Kennfeld des Luftmengenmessers 135 aufgetragen. Über der realen Luftmenge MLR ist das Ausgangssignal MLM des Luftmengensensors 135 aufgetragen. Mit einer durchgezogenen Linie ist der Zusammenhang bei einem toleranzfreien Sensor und mit einer entsprechend gestrichelten Linie der Zusammenhang eines toleranzbehafteten Sensors dargestellt. Bei völlig geschlossenem Steller gelangt die Luftmenge MLAZ zur Brennkraftmaschine. Dies führt bei toleranzfreiem Sensor zu einem Ausgangssignal MLHFZ. Diese Zusammenhänge sind mit einer durchgezogenen Linie dargestellt.

Soll nun eine bestimmte Luftmenge MLI der Brennkraftmaschine zugeführt werden, bei dem der Steller teilweise geöffnet ist, so führt dies zu einem Meßwert MLHFAZ. Die Differenz zwischen dem Meßwert MLHFZ und dem Meßwert MLHFAZ bei geöffnetem Steller wird als ΔMLS bezeichnet. Dieser Wert ΔMLS ist ein Maß für die Luftmassendifferenz.

Wird nun mit einem toleranzbehafteten Steller das Ausgangssignal des Sensors 135 auf vorgegebene Werte eingeregelt, so weicht die tatsächlich zugeführte Luftmasse wesentlich von dem erwarteten Wert ab. Wird beispielsweise ein Sollwert vorgegeben, der dem Sensorsignal MLHFAZ entspricht, so wird lediglich die mit einer senkrechten strichpunktierten Linie dargestellte Luftmenge MLIF zugemessen. Diese Luftmenge MLIF ist deutlich kleiner als der erwartete Wert MLI bei toleranzfreiem Sensor.

Wird dagegen ausgehend von dem Sensorsignal MLHF', das sich bei geschlossenem Steller ergibt, der Luftmassendifferenzwert ΔMLS vorgegeben, so stellt sich der ebenfalls mit einer strichpunktierten Linie markierte Luftmengenwert MLI' ein. Bei dieser Vorgabe ist der Fehler zu dem gewünschten Luftmengenwert MLI deutlich kleiner.

Erfindungsgemäß wird die Luftmassendifferenz auf einen vorgegebenen Sollwert eingeregelt. Die Luftmassendifferenz wird dadurch bestimmt, daß der Steller zeitweise völlig geschlossen wird, wobei in diesem Zustand ein Meßwert MLHF' gemessen wird, der sich bei geschlossenem Steller einstellt. Ferner wird der Steller zeitweise in einen geöffneten Zustand gebracht, bei dem ein erster Meßwert MLHFA' gemessen wird, der der Luftmenge bei geöffnetem Steller entspricht. Diese Größe wird als Istgröße einem Regelkreis zugeleitet bzw. dient zur Bildung eines Korrekturwertes. Die Differenz ΔMLS dieser beiden Meßwerte entspricht näherungsweise der rückgeführten Abgasmenge. Dies ist der Fall, wenn der Gasdurchsatz, bestehend aus Frischluft und Abgas nicht von der Abgasrückführrate abhängt.

Bei einer ersten Ausführungsform wird, um den Einfluß der Toleranz des Sensors 135 zu minimieren, ein Modulationsverfahren eingesetzt. Der Abgasrückführsteller wird abwechselnd so angesteuert, daß eine Abgasrückführung erfolgt, d. h. das Abgasrückführventil 120 geöffnet ist und daß keine Abgasrückführung erfolgt, d. h. das Abgasrückführstellglied geschlossen ist. Die resultierende Luftmengendifferenz zwischen dieser ersten Position, bei der das Abgasrückführventil geöffnet ist, und dieser zweiten Position, bei der das Abgasrückführventil geschlossen ist, entspricht näherungsweise der rückgeführten Abgasmenge, da die mit Abgasrückführung geringere in den Motor strömende Gasmenge mit Abgas aufgefüllt wird. Mit der Luftmengendifferenz wird der Regelkreis geführt.

Da die Luftmengendifferenz mit demselben Sensor gemessen wird, wirkt sich die Sensortoleranz nur noch auf die Luftmengendifferenz aus, die näherungsweise der rückgeführten Abgasmenge entspricht. Bei dem in der Beschreibungseinleitung zitierten Beispiel bedeutet dies, daß sich die Abgasmenge nur um 5 % von 50 kg/h, d. h. um ca. 2,5 kg/h ändert. In Figur 3 ist eine erste Ausgestaltung einer entsprechenden Regelstruktur mit einem Modulationsverfahren zur Luftmengenmessung dargestellt.

Der Sollwertbildner 300 gibt ausgehend von verschiedenen Betriebskenngrößen, die nicht dargestellt sind, den Sollwert ΔMLS für die Luftmassendifferenz vor. Der Sollwert ΔMLS für die Luftmassendifferenz gelangt zu einem Verknüpfungspunkt 305, an dessen zweitem Eingang mit negativem Vorzeichen der Istwert ΔMLI für die Luftmassendifferenz anliegt. Das Ausgangssignal des Verknüpfungspunktes 305 gelangt zu einem Regler 310. Bei dem Regler 310 handelt es sich im wesentlichen um den aus dem Stand der Technik bekannten Regler zur Regelung der Abgasrückführrate. Dabei kann vorgesehen sein, daß dieser auch mehrere Stellglieder wie beispielsweise ein Abgasrückführventil und/oder eine Drosselklappe ansteuert.

Das Ausgangssignal des Reglers gelangt zu einem Modulationspunkt 315, an dessen zweitem Eingang das Ausgangssignal der Modulationsvorgabe 320 anliegt. Die Modulation 315 verknüpft die beiden Signale vorzugsweise multiplikativ und beaufschlagt die Steller 120 mit entsprechenden Ansteuersignalen. Abhängig von den Ansteuersignalen stellt sich eine bestimmte reale Luftmenge MLR ein, die der Brennkraftmaschine zugeführt wird. Diese wird von dem Sensor 135 erfaßt und in ein Ausgangssignal MLM umgewandelt. Dieses Ausgangssignal MLM des Luftmengensensors 135 gelangt über ein Hochpaß 350 zu einem Gleichrichter 360 und einem Tiefpaß 370. Am Ausgang des Tiefpasses 370 steht der Istwert ΔMLI für die Luftmassendifferenz an.

Der Sollwertbildner 300 berechnet den Sollwert ΔMLS in Abhängigkeit von verschiedenen Betriebsbedingungen. Als Betriebsbedingungen werden insbesondere die eingespritzte Kraftstoffmenge QK, die Drehzahl N der Brennkraftmaschine oder eine diesen Größen entsprechende Größe und gegebenenfalls weitere Größen berücksichtigt. Dieser Sollwert ΔMLS wird mit dem Istwert ΔMLI verglichen und dem Regler 310 zugeleitet. Dieser errechnet aus der Differenz eine Stellgröße in Form einer Amplitude, die mit dem Ausgangswert der Modulationsvorgabe vorzugsweise multipliziert wird.

Die Modulationsvorgabe 320 liefert ein alternierendes Signal, das zwischen dem Wert 0 und dem Wert 1 mit einer Frequenz F pendelt. Der Wert 0 entspricht einer Stellgröße, die keine Abgasrückführung zur Folge hat. Dies bedeutet, bei einem Abgasrückführventil wird ein solches Signal vorgegeben, daß dieses geschlossen bleibt und daß kein Abgas von der Abgasseite zur Frischluftseite gelangt. Der Wert 1 hat zur Folge, daß der Steller mit einem solchen Signal beaufschlagt wird, daß er eine Position einnimmt, die die maximale Abgasrückführung zur Folge hat.

Die sich einstellende Luftmenge MLR ist von dem toleranzbehafteten Steller 135 als Luftwert MLM gemessen. Der Hochpaß unterdrückt den Gleichanteil des Signals. Mittels des Gleichrichters 360 und des Tiefpasses 370 schließlich als Ausgangssignal die Istgröße ΔMLI gewonnen.

In Figur 4 ist eine weitere Ausgestaltung dieser Ausführungsform dargestellt. Bereits in Figur 3 beschriebene Elemente sind mit entsprechenden Bezugszeichen bezeichnet. Diese Ausgestaltung unterscheidet sich von der Ausgestaltung gemäß Figur 3 im wesentlichen durch die Modulation bzw. Demodulation der Signale. Der Meßwert MLM des Sensors 135 gelangt über einen Verknüpfungspunkt 410 zur Demodulation 400, an deren Ausgang der Istwert ΔMLI anliegt. Die Modulationsvorgabe 420 beaufschlagt zum einem Begrenzer 440, dessen Ausgangssignal zur Modulation 315 gelangt. Ferner beaufschlagt die Modulationsvorgabe 420 eine Korrektur 430, die wiederum den Verknüpfungspunkt 410 beaufschlagt.

Die Modulationsvorgabe liefert ein Signal, das zwischen den Werten -1 und +1 alterniert. Der Begrenzer 440 begrenzt das Ausgangssignal der Modulation auf Werte zwischen 0 und 1. Die Demodulation des Signals erfolgt durch Multiplikation des Ausgangssignals der Modulationsvorgabe 420 mit dem Ausgangssignal des Sensors 135. Hierzu wird auch das Ausgangssignal der Modulationsvorgabe 420 mit der Korrektur 430 entsprechend der Dynamik der Strecken phasenverschoben. Die Demodulation 400 umfaßt im wesentlichen einen Tiefpaß, der hochfrequente Anteile unterdrückt.

Erfindungsgemäß wird auf die Differenz zwischen den Luftwerten für geschlossene und geöffnete Abgasrückführklappe geregelt. D. h., es wird die Differenz zwischen Luftwerten ohne Abgasrückführung und Luftwerten mit Abgasrückführung geregelt. Bei den dargestellten Ausführungsformen wird der Istwert mittels Modulation gewonnen.

Erfindungsgemäß wird der Steller 120 derart getaktet angesteuert, daß er abwechselnd geöffnet und völlig geschlossen ist. Dies bedeutet, die Ansteuerung des Stellers 135 erfolgt derart, daß abwechselnd keine Abgasrückführung erfolgt und daß eine Abgasrückführung abhängig von dem gewünschten Sollwert erfolgt. Bei geöffnetem Steller, d. h. bei erfolgter Abgasrückführung wird ein erster Meßwert erfaßt. Bei geschlossenem Steller, d. h. es erfolgt keine Abgasrückführung, wird ein zweiter Meßwert erfaßt. Die Differenz der beiden Meßwerte wird als Istgröße dem Regler 310 zugeführt.

Das Ausgangssignal des Reglers wird mit dem Signal der Modulationsvorgabe 320 verknüpft. Der Steller 120 wird mit einem Signal mit fester Frequenz und einer von dem Vergleich zwischen Istwert und Sollwert abhängigen Amplitude beaufschlagt.

In Figur 5 sind verschiedene Signale über der Zeit t aufgetragen. Zum einen ist mit einer durchgezogenen Linie das idealisierte Ausgangssignal MLM des Sensors 135 aufgetragen. Dieses Signal schwankt entsprechend der Frequenz des Signals der Modulationsvorgabe 320 um einen Mittelwert ML, der der einzustellenden Luftmenge entspricht. Dieses Signal weist einen erheblichen Gleichanteil, der der Luftmenge ML entspricht, auf. Der Gleichanteil wird mittels des Hochpasses 350 ausgefiltert. Am Ausgang des Hochpasses 350 stellt sich das mit einer durchgezogenen und gestrichelten Linie eingezeichnete Signal ein. Dieses wird dem Gleichrichter 360 zugeführt, der das Signal gleichrichtet. Der sich anschließende Tiefpaßfilter 370 gleicht Schwankungen aus. Am Ausgang des Gleichrichters bzw. des Tiefpasses 370 liegt das Signal ΔMLI an, das mit einer strichpunktierten Linie eingezeichnet ist.

Eine weitere Ausführungsform der Erfindung ist in den Figuren 6 und 7 dargestellt. Bei der Ausgestaltung gemäß Figur 6 wird ebenfalls die Luftmassendifferenz als Regelgröße eingesetzt. Bei der Ausgestaltung gemäß Figur 7 wird als Regelgröße die Luftmenge eingesetzt, wobei der Luftmengensollwert entsprechend korrigiert wird.

Insbesondere im stationären Betrieb, mit seltenen Arbeitspunktwechseln, kann ein vereinfachtes Verfahren, das in Figur 6a dargestellt ist, eingesetzt werden. Dieses Verfahren ist aber auch im dynamischen Betrieb verwendet werden. Im stationären Wert werden die Adaptionswerte gelernt und in allen Betriebszuständen verwendet.

Der Luftmengenwert MLHFZ bei geschlossenem Abgasrückführventil, d. h. ohne Abgasrückführung, wird gemessen und geeignet abgespeichert. Im normalen Betrieb wird dann lediglich der Luftmengenwert MLHFA in Zuständen mit Abgasrückführung gemessen.

Ausgehend von dem gemessenen Wert MLHFA und den abgespeicherten Werten MLHFZ wird dann der Wert ΔMLI für die Luftmassendifferenz bestimmt. Besonders vorteilhaft ist es, wenn Werte für die Luftmenge MLHFZ ohne Abgasrückführung an mehreren Arbeitspunkten gemessen werden. Mehrere Arbeitspunkte und die entsprechenden Luftmengenwerte definieren Stützstellen in wenigstens einer oder zwei Ebenen. Vorzugsweise werden die Werte mittels einer Kennfeldadaption adaptiert. Ein entsprechendes Verfahren ist aus der DE-OS 195 28 696 bekannt. Die in drei oder vier Betriebspunkten gelernten Luftmassenwerte HLHFZ für ein geschlossenes Abgasrückführventil spannen eine oder zwei Ebenen über den Werten für die Kraftstoffmasse QK und der Drehzahl N auf. Die Ebene ergibt Werte für die Luftmasse bei geschlossener Abgasrückführung für alle QK und N Betriebspunkte.

Eine Ausgestaltung dieser Ausführungsform ist in Figur 6a dargestellt. Bereits in früheren Figuren beschriebene Elemente sind mit entsprechenden Bezugszeichen bezeichnet. Das Ausgangssignal des Sensors 135 gelangt über ein Schaltmittel 650 zu dem Verknüpfungspunkt 605. Das Schaltmittel 650 verbindet wahlweise das Ausgangssignal des Sensors 135 oder das Ausgangssignal einer Konstantwertvorgabe 655 mit dem Verknüpfungspunkt 605.

Das Ausgangssignal 135 gelangt ferner über ein Schaltmittel 615 zu einem ersten PT1-Glied 610, über ein Schaltmittel 625 zu einem zweiten PT1-Glied 620 und über ein weiteres Schaltmittel 635 zu einem dritten PT1-Glied 630. Die PT1-Glieder 610, 620 und 630 beaufschlagen ein Kennfeld 600 mit Signalen. Dem Kennfeld 600 wird ferner das Ausgangssignal des Drehzahlsensors 152 sowie das Ausgangssignal QK der Mengenvorgabe 152 zugeführt.

Die Schaltmittel 615, 625, 635 und 650 werden von einer Logik 640 angesteuert. Die Logik verarbeitet insbesondere die Signale eines Drehzahlsensors 165 und der Mengenvorgabe 152.

Diese Einrichtung arbeitet wie folgt. Dem Regler 310 wird entsprechend wie in den Ausführungsformen gemäß Figur 3 und Figur 4 die Differenz zwischen dem Sollwert ΔMLS und dem Istwert ΔMLI für die Luftmassendifferenz zugeführt. Der Istwert ΔMLI für die Luftmassendifferenz wird ausgehend von der Differenz zwischen dem Ausgangssignal des Sensors 135 und den in dem Kennfeld 600 abgespeicherten Wert MLEB bestimmt.

Der Kennfeldwert MLEB entspricht dem bei den vorliegenden Betriebsbedingungen sich ergebenden Luftmengenwert, der sich ohne Abgasrückführung einstellt. Bei dem Wert MLHFA handelt es sich um den Wert für die Luftmenge, der sich mit Abgasrückführung einstellt. Ausgehend von diesen beiden Werten ergibt sich als Differenz der Wert ΔMLI für die aktuelle Luftmassendifferenz. Der Luftmengenwert MLHFZ, der sich ohne Abgasrückführung, d. h. bei geschlossenem Abgasrückführventil, einstellen würde, wird dabei aus dem Kennfeld 600 ausgelesen.

Besonders vorteilhaft ist es, wenn das Kennfeld 600 wie folgt realisiert ist. Jeweils ein Betriebspunkt und ein Luftmengenwert definieren einen Punkt einer Ebene. Drei solcher Betriebspunkte mit den entsprechenden zugehörigen Luftmengenwerten definieren drei Stützstellen, die wiederum eine Ebene definieren. Beim Vorliegen einer dieser drei Stützstellen wird jeweils der zugehörige Luftmengenwert erfaßt. Durch diese Ebene wird jedem Betriebspunkt ein Luftmengenwert zugeordnet. Ein Betriebspunkt wird vorzugsweise durch die Drehzahl der Brennkraftmaschine und die eingespritzte Kraftstoffmenge QK definiert.

Die Logik 640 erkennt ausgehend von der Drehzahl N und der eingespritzten Kraftstoffmenge QK, welcher Betriebszustand vorliegt. Liegt keiner der Betriebszustände vor, die eine Stützstelle der Ebene definieren, werden die Schaltmittel 615, 625, 630 und 650 in die in Figur 6a dargestellte Stellung gesteuert.

Dies bedeutet, der gemessene Luftmengenwert gelangt unmittelbar zu dem Verknüpfungspunkt 605 und anschließend über den Verknüpfungspunkt 305 zu dem Regler 310 für die Abgasmasse. Ausgehend von dem Betriebszustand, der durch die Drehzahl N und die eingespritzte Kraftstoffmenge QK definiert ist, berechnet das Kennfeld 600 die entsprechende Luftmenge MLEB, die sich bei geschlossenem Abgasrückführventil ergeben würde. Der Verknüpfungspunkt 605 verknüpft diese beiden Signale und bildet einen Istwert ΔMLI für die Luftmassendifferenz.

Liegt ein Betriebszustand vor, der einem Stützpunkt des Kennfeldes entspricht, so wird das entsprechende Schaltmittel 615, 625 oder 635 in seinen geschlossenen und das Schaltmittel 650 in seinen geöffneten Zustand übergeführt, bei dem der Verknüpfungspunkt 605 mit der Vorgabe 655 verbunden wird. Der gemessene Luftmengenwert wird zur Adaption verwendet. Die bei geschlossenem Abgasrückführventil gemessene Luftmengenwerte werden jeweils um die betreffende Stützstelle herum mit dem zugehörigen PT1-Glied 610, 620 oder 630 gefiltert.

In diesem Fall erfolgt eine Neuberechnung des Stützpunktes für das Kennfeld 600 bzw. es folgt eine Adaption des Kennfeldes. Ist dies der Fall, so ist dafür gesorgt, daß entweder das Ausgangssignal des Reglers 310 konstant bleibt, die Regelabweichung, d. h. das Eingangssignal des Reglers 310 zu 0 wird, der Luftmengenwert groß wird, so daß der Regler den Steller für die Abgasrückführung schließt, keine Abgasrückführung erfolgt, oder daß mehrere dieser Möglichkeiten gemeinsam vorliegen. Der Wert des PT1-Gliedes für die jeweilige Stützstelle wird beim Verlassen des zugehörigen Betriebsbereiches eingefroren, das heißt abgespeichert. Dieser Wert stellt den für diesen Betriebspunkt gelernten Luftmengenwert für geschlossene Abgasrückführung dar.

Die Logik 640 schaltet das Luftmengensignal des Sensors 135 entweder auf einen Regelzweig, bei dem das Schaltmittel 650 geschlossen ist, oder auf einen Adaptionszweig, bei dem das Schaltmittel 650 geöffnet und wenigstens einer der Schaltmittel 615, 625 oder 635 geschlossen ist. Der Regelzweig subtrahiert den gemessenen Luftmengenwert MLHFA von dem Vergleichswert MLEB, der aus der in dem Kennfeld 600 abgelegten Ebene in Abhängigkeit von der eingespritzten Kraftstoffmenge und der Drehzahl berechnet wird. Dieser so gewonnene Istwert der Luftmassendifferenz wird mit einem vom Arbeitspunkt abhängigen Sollwert ΔMLS verglichen und dem Regler 310 zugeführt.

Besonders vorteilhaft ist es, wenn anstelle der drei Stützstellen eine Vielzahl von Stützstellen vorgesehen ist. So kann beispielsweise vorgesehen sein, daß in unterschiedlichen Betriebsbereichen verschiedene Ebenen definiert werden.

Eine besonders vorteilhafte Weiterbildung obiger Ausführungsform ist in Figur 6b dargestellt. Nachteilig bei der Ausführungsform der Figur 6a ist, daß die Luftmasse nur linear über der Kraftstoffmenge QK und der Drehzahl N im Kennfeld 600 gelernt werden kann. Erfindungsgemäß wird bei der Weiterbildung der Figur 6b eine Differenz zu einer üblichen Luftmasse abgespeichert. Diese Übliche Luftmasse ist in einem Kennfeld 670 abhängig von der Kraftstoffmenge QK und der Drehzahl N abgelegt.

Die Weiterbildung gemäß Figur 6b unterscheidet sich im wesentlichen von der Figur 6a darin, daß das Ausgangssignal des Sensors 135 über einen Verknüpfungspunkt 660 zu den Schaltmitteln 615, 625 und 635 gelangt und daß das Ausgangssignal MLEB des Kennfeldes 600 gelangt über einen Verknüpfungspunkt 665 zu dem Verknüpfungspunkt 606 der dem Verknüpfungspunkt 605 bei Figur 6a entspricht.

Dies bedeutet, vor der Adaption wird von dem gemessen Luftmengenwert die übliche Luftmenge abgezogen. Adaptiert und in dem Kennfeld 600 abgespeichert wird nur die Differenz zur üblichen Luftmenge.

Besonders vorteilhaft hierbei ist, daß das Ausgangssignal des Kennfeldes 670 ausgehend von verschiedenen Parametern korrigiert werden kann. Dies sind beispielsweise verschiedene Druck und Temperaturwerte.

Besonders vorteilhaft ist es auch, wenn die Korrektur in dem Verknüpfungspunkt 606 multiplikativ und/oder additiv erfolgt. Das heißt in dem Kennfeld ist ein multiplikativer Faktor zur Korrektur abgelegt.

Eine weitere Ausgestaltung der erfindungsgemäßen Vorgehensweise ist in Figur 7 dargestellt. Bereits beschriebene Elemente sind mit entsprechenden Bezugszeichen bezeichnet. Ein Sollwertbildner 700 wertet die Signale des Drehzahlsensors 165 und der Kraftstoffmengenvorgabe 152 aus. Der Sollwertbildner 700 entspricht im wesentlichen dem Sollwertbildner 300. Der Sollwertbildner 700 gibt im Gegensatz zum Sollwertbildner 300 einen Sollwert für die Luftmenge MLS vor. Über den Verknüpfungspunkt 705 gelangt diese zu einem weiteren Verknüpfungspunkt 710. Das Ausgangssignal des Verknüpfungspunktes 710 gelangt zu einem Regler 715, der im wesentlichen dem Regler 310 entspricht.

Am zweiten Eingang des Verknüpfungspunktes 705 liegt ein Korrekturwert K an, der von einem Korrekturkennfeld 720 bereitgestellt wird, an. Am zweiten Eingang des Verknüpfungspunktes 710 liegt das Ausgangssignal MLM des Luftmengenmessers 135 an.

Das Ausgangssignal des Luftmengenmessers 135 gelangt ferner über ein Schaltmittel 790 zu einem PT1-Glied 780, zu einen PT1-Glied 781 oder wird nicht weitergeleitet. Von den PT1-Gliedern 780 und 781 gelang es zu einem Verknüpfungspunkt 760. In dem Verknüpfungspunkt 760 werden die beiden Signale voneinander subtrahiert und gelangen als Größe ΔMLI zu einem weiteren Verknüpfungspunkt 750, an dessen zweitem Eingang das Ausgangssignal einer Sollwertvorgabe 770 anliegt. Diese Sollwertvorgabe 770 entspricht im wesentlichen ebenfalls der Sollwertvorgabe 300 und liefert ein Ausgangssignal bezüglich des Sollwertes für die Luftmassendifferenz.

Das Ausgangssignal des Luftmengenmessers 135 gelangt ferner über ein Schaltmittel 792 zu einem PT1-Glied 782, zu einem PT1-Glied 783 oder wird nicht weitergeleitet. Von den PT1-Gliedern 782 und 783 gelang es zu einem Verknüpfungspunkt 762. In dem Verknüpfungspunkt 762 werden die beiden Signale voneinander subtrahiert und gelangen als Größe ΔMLI zu dem weiteren Verknüpfungspunkt 750, an dessen zweitem Eingang das Ausgangssignal einer Sollwertvorgabe 770 anliegt.

Das Ausgangssignal des Luftmengenmessers 135 gelangt ferner über ein Schaltmittel 794 zu einem PT1-Glied 784, zu einen PT1-Glied 785 oder wird nicht weitergeleitet. Von den PT1-Gliedern 784 und 785 gelang es zu einem Verknüpfungspunkt 764. In dem Verknüpfungepunkt 764 werden die beiden Signale voneinander subtrahiert und gelangen als Größe ΔMLI zu den weiteren Verknüpfungspunkt 750, an dessen zweitem Eingang das Ausgangssignal einer Sollwertvorgabe 770 anliegt.

Das Ausgangssignal des Verknüpfungspunktes 750 gelangt über ein Schaltmittel 740 zu einem Regler 730, der wiederum das Korrekturfeld 720 mit Signalen beaufschlagt.

Die Schaltmittel 790, 792, 794, 740, 742 und 744 werden von einer Logik 795, abhängig von Betriebskenngrößen wie der Drehzahl und der eingespritzten Kraftstoffmenge QK angesteuert.

Bei dieser Ausführungsform wird die Luftmenge als Regelgröße verwendet. Der wesentliche Unterschied zum Stand der Technik besteht darin, daß wie in Figur 7 dargestellt, der Luftmengensollwert über wenigstens eine Korrekturebene 720 modifiziert wird. Anstelle des Luftmengensollwerts kann alternativ auch der Luftmengenistwert entsprechend modifiziert werden bzw. es kann auch die Regelabweichung, d. h. das Eingangssignal des PI-Reglers 715 modifiziert werden.

Die wenigstens eine Korrekturebene wird durch wenigstens drei Stützstellen bestimmt. Die Stützstellen sind das Ergebnis der mittels eines wenigstens Integral-Verhalten aufweisenden Reglers eingeregelten Sollwerts für die Luftmassendifferenz. Die Sollwerte für diese Regelung werden von dem Kennfeld 770 vorgegeben. Der Istwert der Luftmassendifferenz wird aus den Luftmengenwerten mit offenem und geschlossenem Abgasrückführventil ermittelt.

Zur Bestimmung der Korrekturwerte wird wie folgt vorgegangen. Ist einer der drei Betriebspunkten erreicht, der eine Stützstelle des Kennfeldes 720 definiert, so werden die entsprechenden Schaltmittel 790 und 740, 792 und 742, 794 und 744 derart angesteuert, daß der entsprechende Adaptionszweig aktiv ist. Im Verknüpfungspunkt 750, 752, 754 wird die Abweichung der Luftmassendifferenz ΔMLI von ihrem Sollwert ΔMLS bestimmt. Der entsprechende Regler 730, 732 oder 734 bestimmt einen Korrekturwert K, der in dem Kennfeld 720 abgelegt wird. Mit diesem Korrekturwert wird dann der Sollwert, der Istwert oder die Regelabweichung des Luftmengenreglers korrigiert.

Die Logik 795 bestimmt abhängig von wenigstens der Drehzahl N und der eingespritzten Kraftstoffmenge QK, wann die Schaltmittel 790, 792, 794 angesteuert werden, um den Luftmengenwert für die geschlossene Abgasrückführung und die offene Abgasrückführung zu messen. Ferner bestimmt die Logik, wann die Schaltmittel 740, 742 und 744 angesteuert werden, um die Werte für die Stützstellen zu ermitteln, und welcher Integrator 730, 732 und 734 aktiv ist.

Ausgehend von der mittels des Luftmengenmessers gemessenen Luftmenge MLM und dem von der Sollwertvorgabe 700 vorgegebenen Sollwert MLS bestimmt der Verknüpfungspunkt 710 die Regelabweichung für die Luftmenge. Ausgehend von dieser Regelabweichung bildet der Regler 715, der vorzugsweise Proportionales und Integrales (PI) Verhalten aufweist, ein Ansteuersignal zur Ansteuerung des Stellers 120.

Bei allen Ausgestaltungen können neben den Betriebskenngrößen Drehzahl N und der Kraftstoffmenge QK weitere und/oder andere Betriebskenngrößen verwendet werden. Besonders vorteilhaft ist die Verwendung von Größen, die der eingespritzten Kraftstoffmenge und/oder der Drehzahl entsprechen und/oder von ihr abhängen.

## Patentansprüche

1. Verfahren zur Steuerung einer Brennkraftmaschine mit einem Steller zur Beeinflussung der Menge an rückgeführtem Abgas, wobei eine Istgröße bestimmt wird, die die Menge an rückgeführtem Abgas kennzeichnet, wobei diese Istgröße mit einer Sollgröße verglichen und ausgehend von diesem Vergleich eine Stellgröße zur Ansteuerung des Stellers bestimmt wird, dadurch gekennzeichnet, daß ein erster Meßwert in einer ersten Position (geöffnet) des Stellers und ein zweiter Meßwert in einer zweiten Position (geschlossen) des Stellers erfaßt wird, wobei ausgehend von der Differenz der beiden Meßwerte die Istgröße oder ein Korrekturwert vorgebbar ist.

2. Verfahren nach Anspruch 1, dadurch gekennzeichnet, daß der zweite Meßwert bei Vorliegen bestimmter Betriebszustände ermittelt und in einem Kennfeld abgelegt wird.

3. Verfahren nach Anspruch 1 oder 2, dadurch gekennzeichnet, daß die Differenz zwischen dem ersten Meßwert und dem abhängig von Betriebskenngrößen aus dem Kennfeld ausgelesenen zweiten Meßwert als Istwert verwendet wird.

4. Verfahren nach einem der vorhergehenden Ansprüche, dadurch gekennzeichnet, daß der erste und der zweite Meßwert bei Vorliegen bestimmter Betriebszustände ermittelt wird und daß ausgehend von dem Vergleich der beiden Meßwerte Korrekturwerte in einem Kennfeld abgelegt werden.

5. Verfahren nach Anspruch 4, dadurch gekennzeichnet, daß abhängig vom Betriebszustand aus dem Kennfeld Korrekturwerte zur Korrektur eines Sollwertes oder eines Istwertes eines Luftmengenreglers ausgelesen werden.

6. Verfahren nach Anspruch 1, dadurch gekennzeichnet, daß der Steller derart getaktet angesteuert wird, daß er abwechselnd seine erste und seine zweite Position einnimmt.

7. Verfahren nach Anspruch 6, dadurch gekennzeichnet, daß ausgehend von dem Vergleich zwischen dem Istwert und dem Sollwert ein Signal mit fester Frequenz und einer von dem Vergleich zwischen dem Istwert und Sollwert abhängigen Amplitude vorgebbar ist.

8. Verfahren nach einem der Ansprüche 6 oder 7, dadurch gekennzeichnet, daß ausgehend von dem Vergleich zwischen dem Istwert und dem Sollwert ein Faktor bestimmt wird, mit dem das Ausgangssignal einer Modulationsvorgabe multipliziert wird.

9. Verfahren nach einem der Ansprüche 6 bis 8, dadurch gekennzeichnet, daß der Signalgenerator ein Signal mit einer festen Frequenz und Amplitude vorgibt.

10. Vorrichtun zur Steuerung einer Brennkraftmaschine mit einem Steller zur Beeinflussung der Menge an rückgeführtem Abgas, mit Mitteln zur Bestimmung einer Istgröße, die die Menge an rückgeführtem Abgas kennzeichnet, mit Vergleichsmitteln, die diese Istgröße mit einer Sollgröße vergleichen und einem Regler, der ausgehend von diesem Vergleich eine Stellgröße zur Ansteuerung des Stellers bestimmt, dadurch gekennzeichnet, daß Mittel vorgesehen sind, die einen ersten Meßwert in einer ersten Position (geöffnet) des Stellers und einen zweiten Meßwert in einer zweiten Position (geschlossen) des Stellers erfassen und ausgehend von der Differenz der beiden Meßwerte die Istgröße oder ein Korrekturwert vorgeben.
